# EUROPEAN PATENT APPLICATION

(11) **EP 0 918 168 A1**
(43) Date of publication of application: **26.05.1999**
(21) Application number: 98308619.0
(22) Date of filing: 21.10.1998
(51) Int. Cl.: F16C 11/06

(54) **Ball joint link**

(30) Priority: 24.11.1997 US 977176
(71) Applicant: Mac Lean-Fogg Company, Wheeling, IL 60090 (US)
(72) Inventor: Hellon, Keith, Libertyville, Illinois 60048 (US)
(74) Representative: McLeish, Nicholas Alistair Maxwell

(57) **Abstract**

A ball joint link (10) includes a housing (14), a retainer (16) and a ball stud (12). The housing and the retainer define respective bearing surfaces (32,48) that are in direct sliding contact with a spherical end portion (28) of the ball stud. The retainer fits into a recess (36) formed in the housing and is secured to the housing to retain the ball stud.

## Description

### BACKGROUND OF THE INVENTION

This invention relates to an improved ball pint link suitable for use in a wide range of applications, including automotive suspension links.

Hellon U.S. Patent 5,615,967 discloses a ball joint link in which the housing is formed of a thermoplastic material. In this link, both the tubular center portion of the link and the ball stud are insert molded in place in the housing. The ball joint link of this patent is lightweight, strong and reliable. However, in some applications, it may be preferable to avoid the expense of insert molding.

Memory U.S. Patent 3,591,669 discloses a ball joint link in which a ball is insert molded in a housing.

Broszat U.S. Patent 5,152,628 discloses a ball and socket joint in which the housing is formed of a thermoplastic material and is joined with a shoulder by either ultrasonic or frictional welding. In the ball and socket joint of Broszat, the spherical portion of the ball stud contacts only a bearing shell mounted on the shoulder, and the ball stud remains free of contact with the housing itself.

The present invention is directed to an improved ball joint link that eliminates the need both for insert molding operations, which as described above can be expensive, and bearing shells, which prevent the ball of the ball joint from directly contacting the housing.

### SUMMARY OF THE INVENTION

The present invention is defined by the following claims, and nothing in this section should be taken as a limitation on those claims.

By way of introduction, the preferred embodiment described below is a ball joint link that includes a ball stud and housing. The ball stud includes a spherical end portion and a threaded portion, and the housing comprises a first spherical bearing surface in sliding contact with the spherical end portion and a recess adjacent to the first spherical bearing surface. A retainer is provided comprising a second spherical bearing surface in sliding contact with the spherical end portion, and a shoulder adjacent to this second spherical bearing surface. The shoulder is secured in the recess of the housing to retain the spherical end portion in the housing. The spherical cavity that is in sliding contact with the spherical end portion of the ball stud is defined in part by the first spherical bearing surface of the housing, and in part by the second spherical bearing surface of the retainer.

The invention itself, together with further features and associated advantages, will best be understood by reference to the following detailed description, taken in conjunction with the accompanying drawings.

### BRIEF DESCRIPTION OF THE DRAWINGS

Figure 1 is a cross-sectional view of a ball joint link that incorporates a presently and preferred embodiment of this invention.

Figure 2 is an exploded view in partial section of the ball joint link of Figure 1.

Figure 3 is a top plan view of the housing 14 of Figure 2.

Figure 4 is side view taken along line 4-4 of Figure 3.

Figure 5 is an end view taken along line 5-5 of Figure 3.

Figure 6 is a cross-sectional view taken along line 6-6 of Figure 3.

Figure 7 is a cross-sectional view of the retainer 16 of Figure 2.

Figure 8 is a plan view of the ring 66 of Figure 2.

### DETAILED DESCRIPTION OF THE PRESENTLY PREFERRED EMBODIMENT

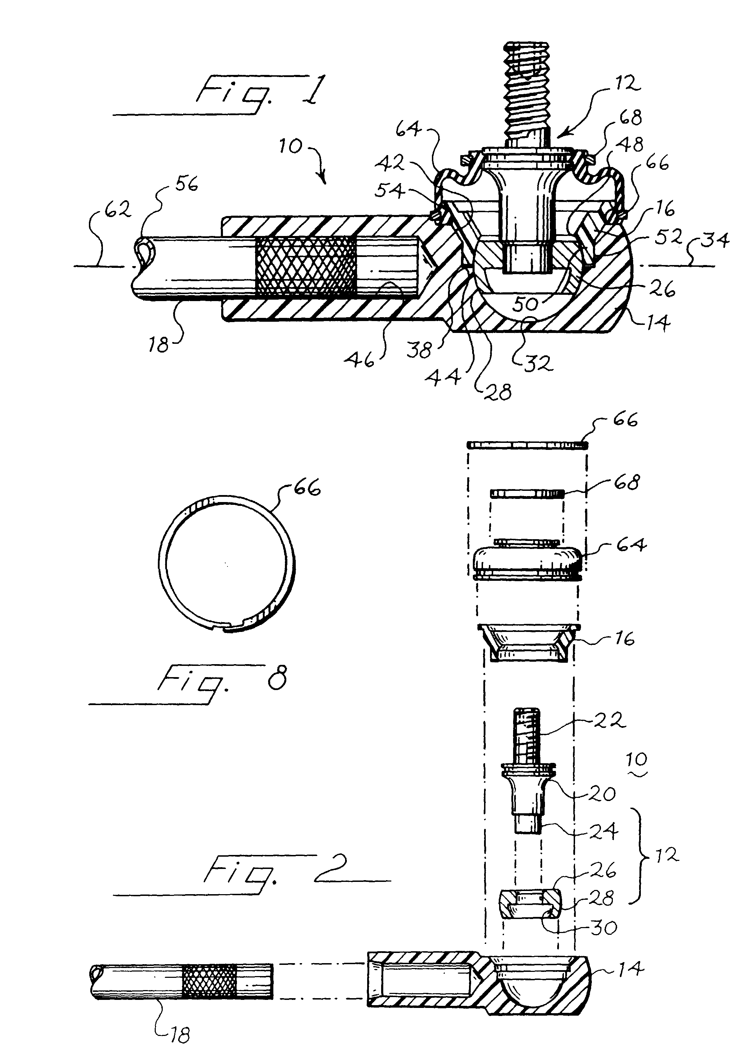

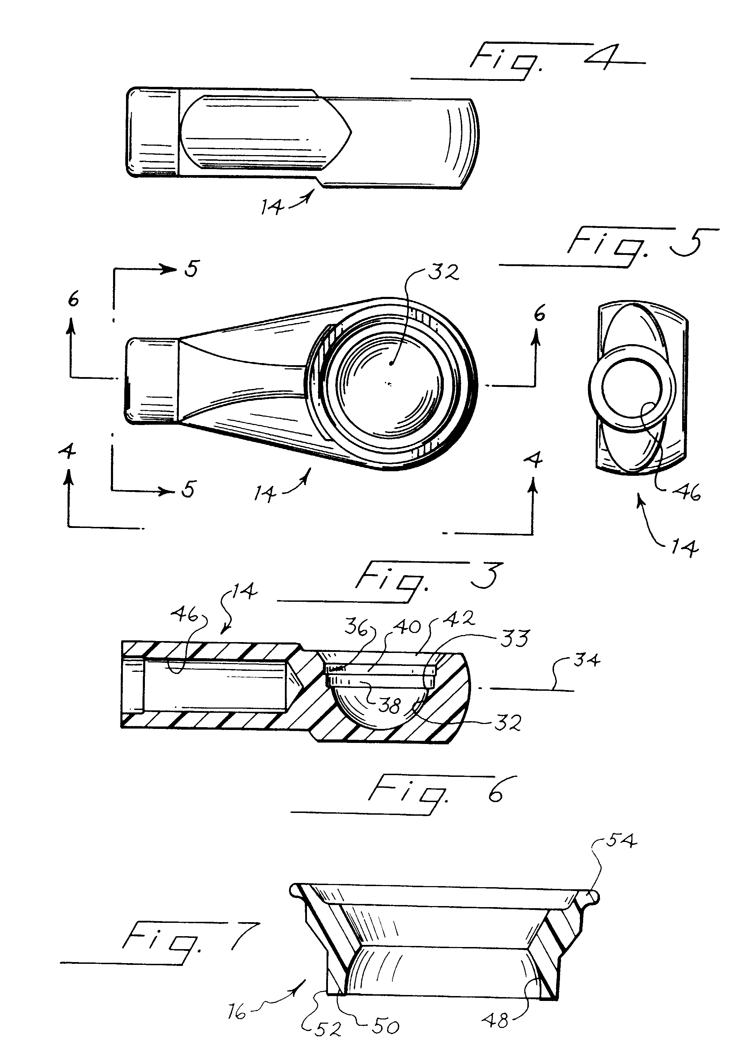

Turning now to the drawings, Figures 1 and 2 show a ball joint link 10 that incorporates a presently preferred embodiment of this invention. The ball joint link 10 includes a ball stud 12 that is secured in a housing 14 by a retainer 16. The housing 14 is also secured to a tubular link 18. Each of these elements will be described in detail below, and then a preferred assembly method will be discussed.

As shown in Figure 2, the ball stud 12 includes a shaft 20 that forms a threaded portion 22 and a splined shank 24. The ball stud 12 also includes a disc 26 that forms a spherical end portion 28. The disc 26 is staked in place on the shank 24, and the disc 26 forms a hollowed out portion 30. As used herein, the term "spherical end portion" is intended broadly to encompass a surface shaped as a portion of a sphere, even in situations such as those shown in Figure 2 where the surface is shaped as a spherical edge of a disc.

Figures 3-6 show various views of the housing 14 as originally formed and prior to assembly. As shown in Figure 6, the housing 14 forms a first spherical bearing surface 32 which in use is in sliding contact with the spherical end portion 28 of the ball stud 12 of Figure 2. In this embodiment, the first spherical bearing surface 32 extends over a hemisphere, and the circular edge 33 of the first spherical bearing surface 32 is aligned with a central plane 34 that passes through the housing 14. This central plane 34 passes through the center of the first spherical bearing surface 32.

The housing 14 also defines a recess 36 immediately adjacent to the first spherical bearing surface 32. This recess includes a first, second and third outer annular walls 38, 40, 42, respectively. The first annular wall 38 is tapered outwardly by a cone angle of about two degrees. The housing 14 also defines a tubular recess 46 used to secure the link 18 as described below.

As shown in Figure 7, the retainer 16 is cylindrically symmetrical in shape, and it defines a second spherical bearing surface 48. The retainer 16 includes an annular ring 50, and the ring 50 forms the second spherical bearing surface 48. The ring 50 also forms a shoulder 52 that is shaped to fit inside the recess 36 of Figure 6 as described below to retain the ball stud 12 in the housing 14. The retainer 16 also includes a lip 54 sized to retain a boot as described below.

As shown in Figure 1, the link 18 in this embodiment is formed of a tube 56 that defines a center line 62. At least one end of the tube 56 has an outside diamond knurl.

Returning to Figures 1 and 2, the ball stud 12 is assembled by pressing the disc 26 onto the shank 24 of the shaft 20 and staking it in place. Grease is placed in the hollowed out portion 30, and link 10 is assembled by placing spherical end portion 28 of the assembled ball stud 12 in the first spherical bearing surface 32, and then by placing the retainer 16 over the ball stud 12. The shoulder 52 initially has a diameter greater than that of the first annular wall 38 by about 0.02 inches such that an interference fit is created. Standard ultrasonic welding techniques are used to vibrate the retainer 16 as it is pressed downwardly until the retainer 16 comes into contact with the third annular wall 42. Ultrasonic vibration during the assembly process creates a friction or shear weld, and weld material from the housing 14 and/or the retainer 16 flows downwardly and is collected in the annular space 44. Once the retainer 16 has been welded in place in the housing 14, the ball stud 12 is positively retained in the housing 14, and both the first and second spherical bearing surfaces 32, 48 are in direct sliding contact with the spherical end portion 28. Once the retainer 16 has been secured in place in the housing 14, all of the ring 50 is received within the recess 36 (Figure 6). The end of the ring 50 extends substantially to the central plane 34.

The link 18 is secured to the housing 14 by preheating the end of the tube 56 (for example by induction heating), and then press fitting the tube 56 in the tubular recess 46. The heated tube 56 causes the material of the housing 14 to flow into the knurled portion of the tube, and creates a secure bond between the housing 14 and the link 18. The other end of the link 18 can be finished as appropriate for the particular application. For example, another ball joint can be mounted on the other end of the link 18, or another type of attachment fixture can be used.

Assembly is completed by installing a flexible resilient boot 64 on the ball stud 12, and snapping the boot into the recess formed between the lip 54 and the housing 14. Then a boot ring 66 is secured in place around the boot 64. This boot ring 66 is preferably formed of a thermoplastic material, and it is initially discontinuous as shown in Figure 8. After the boot ring 66 has been mdunted in place on the boot 64, the discontinuous ends of the boot ring 66 are secured together to permanently fasten the boot 64 in place. This can be done using conventional ultrasonic welding techniques. The upper edge of the boot 64 is held on the ball stud 12 by an upper ring 68.

The resulting ball joint link 10 is light in weight and low in cost to manufacture. The cost of insert molding operations has been avoided, as well as the need for a bearing shell between the ball of the ball stud and the housing. Because the retainer 16 extends to the central plane 34 in the recess 36, there is a large surface area for securing the retainer 16 to the housing 14 in a positive way.

The following details of construction are provided by way of example to clarify the best mode of the invention, and are not intended to limit the scope of this invention in any way. The shaft 20 can be formed of heat treated 4037 steel having a hardness of 28 to 32 on the Rockwell C scale. The splines on the shank 24 can extend in the axial direction, and can have a depth of 0.005 thousandths of an inch and a spacing of 18 splines per inch. The shank 24 may have a one degree taper to facilitate assembly. The spherical disc 26 can be formed of cold rolled 1010 steel. Both the housing 14 and the retainer 16 can be formed of thermoplastic materials such as 33% glass-filled Nylon 6/6. Both the housing 14 and the retainer 16 can readily be injection molded. The diamond knurl on the tube 56 can extend over three-quarters of an inch, have a depth of 0.020 inches, and a spacing of 20 lines per inch. The tube can be formed of an aluminum alloy such as 6061-T6. The boot can be formed of urethane, and the rings 66, 68 may be formed of Nylon 6/6.

Of course, many changes and modifications can be made to the preferred embodiment described above. For example, materials, dimensions and proportions can all be varied as appropriate to suit the intended application. Furthermore, in alternative embodiments, ultrasonic welding can be eliminated and replaced with other types of frictional or shear welding or suitable adhesives. The link 18 may be solid rather than tubular, and may be formed of any suitable material such as glass-fiber, steel, aluminum or carbon fiber composites. Similarly, the ball stud can be a conventional one piece design, and the ball can be a solid sphere rather than hollowed out. Of course, the link may be oriented at any desired angle with respect to the central plane.

The foregoing detailed description has described only a few of the many forms that this invention can take. For this reason, it is intended that this description be regarded as an illustration and not as a definition of this invention. It is only the following claims, including all equivalents, that are intended to define the scope of this invention.

## Claims

1. A ball joint link comprising:
a ball stud comprising a spherical end portion and a threaded portion;
a housing comprising a first spherical bearing surface in sliding contact with the spherical end portion and a recess adjacent to the first spherical bearing surface;
a retainer comprising a second spherical bearing surface in sliding contact with the spherical end portion and a shoulder adjacent to the second spherical bearing surface,
said shoulder secured in said recess to retain the spherical end portion in the housing.

2. A ball joint link comprising:
a ball stud comprising a spherical end portion and a threaded portion;
a tubular link comprising a centerline;
a housing extending around a portion of the link and secured to the link, said housing comprising a central plane substantially aligned with the centerline, said housing further comprising a first spherical bearing surface in sliding contract with the spherical end portion and a recess, said recess extending adjacent to the first spherical bearing surface and the central plane;
a retainer comprising a second spherical bearing surface in sliding contact with the spherical end portion, and a shoulder adjacent to the second spherical bearing surface,
said shoulder secured in said recess to retain the spherical end portion in the housing, said shoulder extending substantially to the central plane.

3. The invention of Claim 1 wherein the retainer comprises an annular ring, wherein the annular ring comprises the second spherical bearing surface and the shoulder of the retainer, and wherein substantially all of the annular ring is received in the recess.

4. The invention of Claim 1 or 2 further comprising a boot extending around the ball stud and extending into the recess between the housing and the retainer.

5. The invention of Claim 4 further comprising a continuous polymeric ring extending around the boot and securing the boot in place on the retainer.

6. The invention of Claim 3 wherein the housing and the retainer form an annular space extending around the spherical end portion adjacent the shoulder, said space positioned adjacent a plane extending diametrically through a center of the spherical end portion.

7. The invention of Claim 2 or 6 further comprising weld material from at least one of the housing and the retainer in the space.

8. The invention of Claim 2 or 6 wherein the space extends around the first spherical bearing surface.

9. The invention of Claim 1 further comprising a tubular link press fit into the housing.

10. The invention of Claim 2 or 9 wherein the tubular link comprises a knurled portion press fit into the housing.

11. The invention of Claim 1 or 2 wherein the ball stud comprises
a shaft that comprises the threaded portion; and
an annular disc that comprises the spherical end portion, said annular disc staked on said shaft.

12. The invention of Claim 11 wherein the annular disc comprises a hollowed-out portion opposite the threaded portion of the ball stud.

13. The invention of Claim 1 or 2 wherein the first spherical bearing surface extends substantially over a hemisphere.

14. The invention of Claim 1 or 2 wherein the housing and the retainer comprise thermoplastic materials.

15. An automotive suspension system incorporating a ball joint link in accordance with any preceding claim.
